# EUROPEAN PATENT APPLICATION

(11) **EP 4 549 249 A1**
(43) Date of publication of application: **07.05.2025**
(21) Application number: 23830948.8
(22) Date of filing: 31.05.2023
(51) Int. Cl.: B60Q 1/14, B60Q 1/16, B60Q 1/24, F21V 23/00

(54) **VEHICLE LIGHTING SYSTEM**

(30) Priority: 30.06.2022 JP 2022105693
(71) Applicant: Stanley Electric Co. Ltd., Tokyo 153-8636 (JP)
(72) Inventor: KANBE, Yuto, Tokyo 153-8636 (JP); NAKASHIMA, Wataru, Tokyo 153-8636 (JP); KAMBARA, Takeshi, Tokyo 153-8636 (JP)
(74) Representative: Schmidbauer, Andreas Konrad
(86) International application number: PCT/JP2023/020320
(87) International publication number: WO 2024/004498

(57) **Abstract**

To improve visibility ahead of a vehicle in rainy weather.

A vehicle lamp system capable of emitting irradiation light of a variably set light distribution pattern to the front of a vehicle comprising a first lamp disposed on the left side and a second lamp disposed on the right side of front of the vehicle, where, when the position where the vehicle is present is undergoing inclement weather, an area above a horizon line in a front view from the vehicle is irradiated with light having the light distribution pattern, in which a range forward and to the left from the forward center of the vehicle, within the range that can be emitted by the first lamp, is set as a first light irradiation range, and in which the range that can be emitted by the second lamp is set to a dimming range or a non-irradiation range.

## Description

### TECHNICAL FIELD

The present disclosure relates to a vehicle lamp system.

### BACKGROUND ART

Japanese Patent No.6032248 (Patent Document 1) describes a vehicle lighting device that controls the headlights to dim and illuminate a portion of the road surface ahead of the vehicle which corresponds to the road shape estimated by a travel path estimation unit when weather conditions that cause poor visibility ahead of the vehicle is detected. With this vehicle lighting device, for example, the portion estimated as the road surface ahead of the vehicle is illuminated with dimmed light, and other portions are illuminated with normal irradiation light, thereby improving visibility of the road ahead of the vehicle. However, no consideration has been given to the visibility of pedestrians and cyclists present on the side of the road, such as on shoulders and sidewalks, in increment weather.

### PRIOR ART DOCUMENT

### PATENT DOCUMENT

[Patent Document 1] Japanese Patent No.6032248

### SUMMARY OF THE INVENTION

### TECHNICAL PROBLEM

In a specific aspect, it is an object of the present disclosure to provide a technology capable of further improving visibility ahead of a vehicle in inclement weather such as in rainy weather.

### SOLUTION TO THE PROBLEM

A vehicle lamp system according to one aspect of the present disclosure is (a) a vehicle lamp system capable of emitting irradiation light of a variably set light distribution pattern to the front of a vehicle, (b) the system comprising a first lamp disposed on the left side of the front of the vehicle and a second lamp disposed on the right side of the front of the vehicle, (c) where, when the position where the vehicle is present is undergoing inclement weather, an area above a horizon line in a front view from the vehicle is irradiated with light having the light distribution pattern, in which a range forward and to the left from the forward center of the vehicle, within the range that can be emitted by the first lamp, is set as a first light irradiation range, and in which the range that can be emitted by the second lamp is set to a dimming range or a non-irradiation range.

According to the above configuration, it is possible to further improve visibility ahead of a vehicle in inclement weather such as in rainy weather.

### BRIEF DESCRIPTION OF THE DRAWINGS

FIG. 1 is a block diagram showing the configuration of a vehicle lamp system according to one embodiment.
FIG. 2 is a diagram showing a configuration example of a computer system.
FIG. 3 is a diagram for explaining the range in which light curtain phenomenon occurs in rainy weather.
FIG. 4 is a diagram for explaining the range of light that can be emitted by each lamp unit.
FIG. 5(A) and FIG. 5(B) are diagrams for explaining one example of high beam irradiation mode in rainy weather (irradiation mode 1).
FIG. 6(A) is a diagram for explaining the contrast between the pedestrian luminance and the background luminance according to the above-described irradiation mode.
FIG. 6(B) is a diagram for explaining the contrast between the pedestrian luminance and the background luminance according to the irradiation mode of comparative example 1.
FIG. 6(C) is a diagram for explaining the contrast between the pedestrian luminance and the background luminance according to the irradiation mode of comparative example 2.
FIG. 7(A) and FIG. 7(B) are diagrams for explaining another example of high beam irradiation mode in rainy weather (irradiation mode 2).
FIG. 8(A) and FIG. 8(B) are diagrams for explaining another example of high beam irradiation mode in rainy weather (irradiation mode 3).
FIG. 9(A) and FIG. 9(B) are diagrams for explaining another example of high beam irradiation mode in rainy weather (irradiation mode 4).
FIG. 10 is a flowchart showing operating procedure of a vehicle lamp system.

### MODE FOR CARRYING OUT THE INVENTION

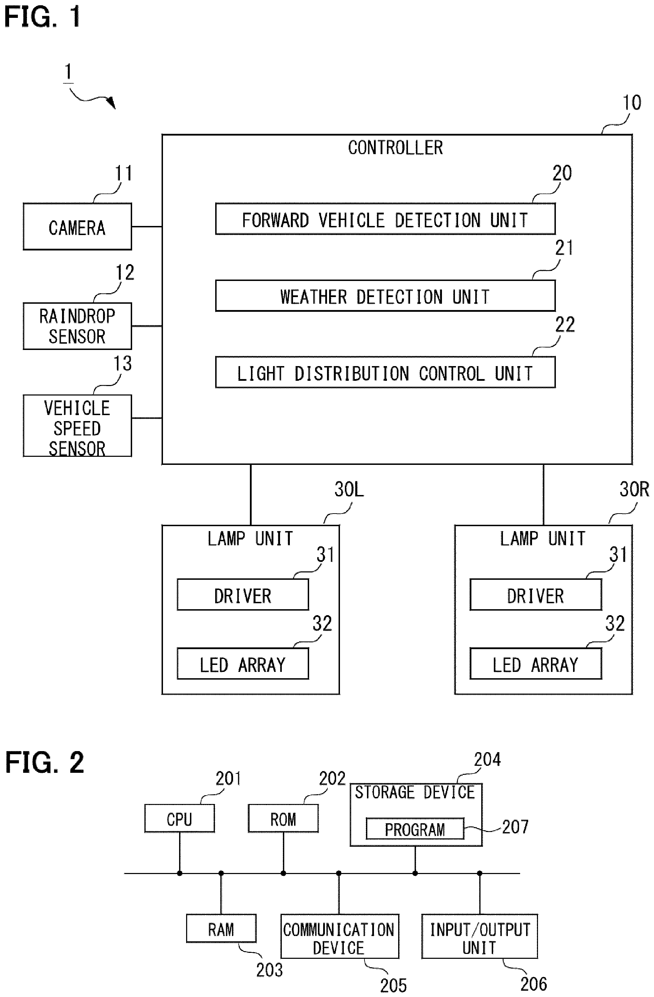

FIG. 1 is a block diagram showing the configuration of a vehicle lamp system according to one embodiment. The vehicle lamp system 1 of the present embodiment is configured to include a controller 10, a camera 11, a raindrop sensor 12, a vehicle speed sensor 13, and a pair of lamp units (a first lamp, a second lamp) 30L, 30R.

The controller 10 controls light irradiation of each headlight unit 30L, 30R. The controller 10 may be configured using a computer system equipped with, for example, a processor (CPU: Central Processing Unit), a ROM (Read Only Memory), a RAM (Random Access Memory), a storage device such as a flash memory, and an input/output interface, etc. The controller 10 of the present embodiment is ready to perform a specified function by having the processor read and execute a program previously stored in the storage device (or the ROM) .

The camera 11 has the function of capturing an image of the space ahead of the own vehicle to generate image data, and the function of detecting the position of a vehicle ahead (a preceding vehicle or an oncoming vehicle), the distance from the own vehicle, pedestrians, and other conditions ahead of the own vehicle by performing image recognition processing on the generated image data. The image processing function may be provided on the controller 10 side.

The raindrop sensor 12 detects the amount of rainfall where the vehicle is present, and outputs a signal (or data) that indicates changes according to the amount of rainfall. A variety of publicly known raindrop sensors can be used as the raindrop sensor 12. One example is a sensor such as that described in JP 2006-29807A that is installed at the inside of the vehicle's windshield and uses optical techniques to detect raindrops adhering to the outer surface of the windshield.

The vehicle speed sensor 13 detects the vehicle speed of the own vehicle and outputs a vehicle speed signal (vehicle speed pulse). Here, if the own vehicle has a vehicle speed sensor for other purposes, it may be used as the vehicle speed sensor 13.

The controller 10 described above is configured to include a forward vehicle detection unit 20, a weather detection unit 21, and a light distribution control unit 22 as functional blocks realized by executing a program.

The forward vehicle detection unit 20 detects the presence or absence of a vehicle ahead, its position, its distance from the own vehicle, the type of vehicle ahead (an oncoming vehicle, or a preceding vehicle), etc., based on the data output from the camera 11.

The weather detection unit 21 detects the weather conditions, specifically the amount of rain, based on the output from the raindrop sensor 13. When the amount of rain exceeds a predetermined value, the weather detection unit 21 outputs this (that it is raining) to the light distribution control unit 22.

The light distribution control unit 22 sets a light distribution pattern within the high beam irradiation range of each lamp unit 30L, 30R based on the presence or absence of a vehicle ahead, the position of the vehicle ahead, the distance from the own vehicle, the type of vehicle ahead (an oncoming vehicle, or a preceding vehicle) detected by the forward vehicle detection unit 20, and weather conditions detected by the weather detection unit 22, and generates a control signal in order to realize the light distribution pattern and outputs the signal to each lamp unit 30L, 30R.

The pair of lamp units 30L, 30R are mounted at specified positions on the left and right sides of the front of the own vehicle, and operate in response to control signals provided by the controller 10 to irradiate light in a desired light distribution pattern ahead of the own vehicle. Each lamp unit 30L, 30R is equipped with a driver 31 and an LED array 32 driven by the driver 31. The LED array 32 has a plurality of LEDs (Light Emitting Diodes) arranged in two directions, and the lighting state of each LED is individually controlled by the driver 31, thereby allowing the light distribution pattern to be variably set.

Here, the configuration of lamp unit 30L ,etc. is not limited thereto, and various publicly known configurations can be adopted. For example, a lamp unit configured by combining a light source bulb with a reflector or a shielding plate may be used. Further, a lamp unit equipped with a light source and a liquid crystal element, etc., and capable of individually controlling the light transmission state of each pixel of the liquid crystal element may be used. Further, a lamp unit equipped with a light emitting element such as a laser diode and a scanning element such as a mirror device that scans the light emitted from the light emitting element, and capable of controlling the timing of turning on and off the light emitting element and the scanning timing by the scanning element may be used. Furthermore, lamp unit 30L, etc. may be configured to have a plurality of individual lamp units inside the unit, each of which can irradiate a different fixed light distribution, and the light distribution pattern of lamp unit 30L, etc. may be changed by switching these individual lamp units. Further, lamp unit 30L itself may be configured with a plurality of lamp units, and by switching these, the light distribution pattern may be switched.

FIG. 2 is a diagram showing a configuration example of a computer system. The controller 10 described above can be configured, for example, using the computer system as shown in the figure. A CPU (Central Processing Unit) 201 performs information processing by reading and executing a program 207 stored in a storage device 204. A ROM (Read Only Memory) 202 stores basic control programs or the like required for the operation of the CPU 201. A RAM (Temporary storage memory) 203 temporarily stores data required for the information processing of the CPU 201. The storage device 204 is a large-capacity storage device for storing data, and consists of a hard disk drive, a solid-state drive, or the like. A communication device 205 performs processing related to data communication with other external devices. An input/output unit 206 is an interface for connecting with external devices, and in the present embodiment, is used for connecting with the camera 11, the raindrop sensor 12, the vehicle speed sensor 13, and each of the lamp units 30L and 30R. The CPU 201, etc. are connected to each other via a bus so that they can communicate with each other.

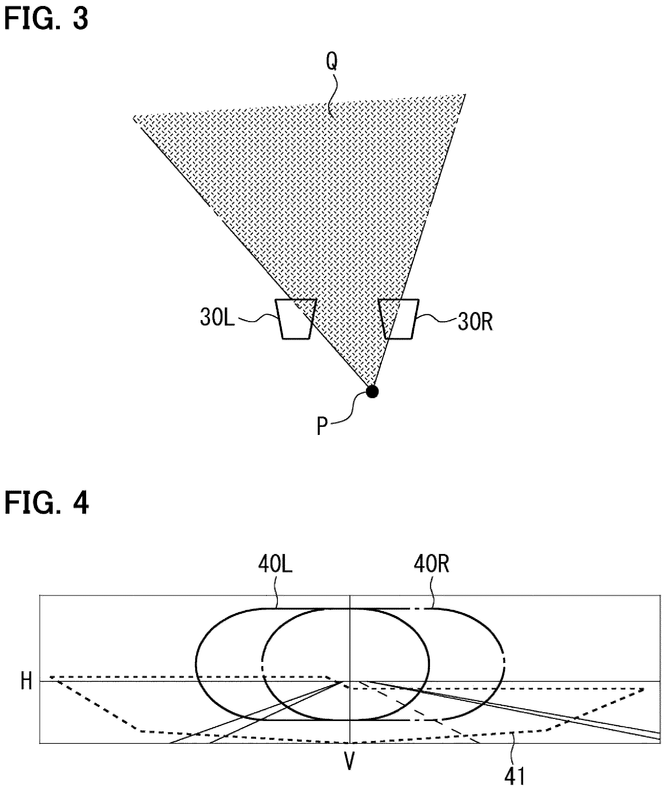

FIG. 3 is a diagram for explaining the range in which light curtain phenomenon occurs in rainy weather. Viewpoint position of the driver of the own vehicle is indicated as **P.** This embodiment assumes a right-hand drive vehicle, thus the viewpoint position P is offset to the right side from the center of the vehicle in the longitudinal direction. Further, it is assumed that each of the lamp units 30L and 30R are disposed on the left and right sides of the front side of the viewpoint position P in the own vehicle. FIG. 3 shows a schematic diagram of the positional relationship of these positions when viewed from above. In rainy weather, the light curtain phenomenon can occur in range Q surrounded by lines connecting the driver's viewpoint position P and the positions of the lamp units 30L and 30R in a plane view. The light curtain phenomenon in the present embodiment refers to a phenomenon in which strong light hits raindrops in the space in front of the vehicle, causing the light to scatter, resulting in a haze. When this light curtain phenomenon occurs, contrast (luminance difference) between the pedestrian luminance on the side of the road (shoulder or sidewalk) and the background luminance becomes smaller, and there is a possibility that visibility of a pedestrian from the viewpoint position P of the own vehicle decreases. Further, there is a possibility that the haze that appears in front of the vehicle be a nuisance to the driver.

FIG. 4 is a diagram for explaining the range of light that can be emitted by each lamp unit. FIG. 4 shows a schematic diagram of the road ahead as seen from the own vehicle. In the figure, line H is an imaginary line (horizontal line) indicating the horizontal direction, and line V is an imaginary line (vertical line) indicating the vertical direction at the center in front of the vehicle. Line H extends to the left and right direction at a position of 0° in the vertical direction. Line V extends vertically at a position of 0° in the horizontal direction (the center position in front of the own vehicle). As shown by a dotted line, the majority of low beam 41 is generally irradiated below the H line. Here, note that low beam 41 is irradiated by a low beam light source (not shown) included in each lamp unit 30L, 30R.

The roughly elliptical range shown by a solid line in the figure is the range in which high beam 40L emitted by lamp unit 30L can be irradiated. This high beam 40L is capable of irradiating a range that is relatively biased to the left side of V line, and is capable of irradiating from approximately in front of the vehicle to the road side on the left side of the own vehicle. Further, with regard to the vertical direction, high beam 40L is capable of irradiating from the upper side to the lower side with respect to the H line. The roughly elliptical range shown by alternate long and short dash line in the figure is the range in which high beam 40R emitted by lamp unit 30R can be irradiated. This high beam 40R is capable of irradiating a range that is relatively biased to the right side of the V line, and is capable of irradiating from approximately in front of the vehicle to the road shoulder on the right side of the own vehicle. Further, with regard to the vertical direction, high beam 40R is capable of irradiating from the upper side to the lower side with respect to the H line.

As shown in the figure, capable irradiation range of high beam 40L and capable irradiation range of high beam 40R partially overlap in front of the own vehicle. Further, the lower side of each capable irradiation range of high beams 40L, 40R partially overlaps with low beam 41. Each high beam 40L, 40R can selectively set any portion within its respective capable irradiation range as a dimming range (or a non-irradiation range; the same applies hereinafter). It is preferable that the capable irradiation range of the entire high beam, which is the combination of the capable irradiation ranges of each high beam 40L, 40R, includes at least a range of ±12° with reference to the V line in the left-right direction, and a range of 2° or more upward and 0° or less downward with reference to the H line in the vertical direction.

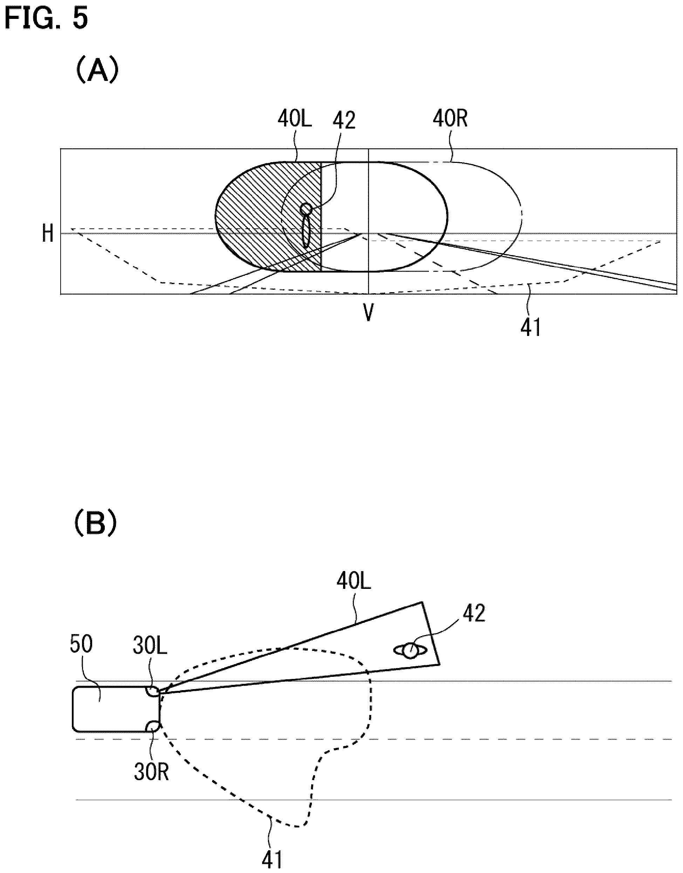

FIG. 5(A) and FIG. 5(B) are diagrams for explaining one example of high beam irradiation mode in rainy weather (irradiation mode 1). FIG. 5(A) shows a schematic view of the road ahead from the own vehicle, and FIG. 5(B) shows a schematic view of the own vehicle from above. As shown in each figure, in the vehicle lamp system of the present embodiment, in rainy weather, the light irradiation range of high beam 40L is narrowed so that lamp unit 30L of each lamp unit 30L, 30R of the own vehicle 50 selectively irradiates only the relatively left side. In FIG. 5(A), the light irradiation range of high beam 40L is indicated by a pattern of slanted lines. The portion of high beam 40L that is not indicated by a pattern of slanted lines is the dimming range.

As an example, it is preferable that the right end of the light irradiation range of high beam 40L is set to 0° (V line position) or more (to the left side of the V line position) . Further, it is more preferable that the light irradiation range of high beam 40L is set to be biased to the left side by 1° or more, toward the road side to the left of the own vehicle. Further, it is preferable that the lower end of the light irradiation range of high beam 40L is set to 0° (H line position), although the lower side is set to up to about 0.05°, the lower side may be even lower than this.

Further, lamp unit 30R is controlled to be turned off. That is, the entire high beam 40R is set to the dimming range. Here, note that the concept of "turned off" in the present embodiment also includes nearly turning off the light, such as having turned on slightly. Further, low beam 41 is irradiated as usual with no particular change.

With the irradiation mode as described above, light is mainly emitted in a narrow width toward the side of the road on the left side of the own vehicle 50, so that the light is emitted to the pedestrian 42 and not to the right side of the pedestrian 42. As a result, the contrast between the luminance of the pedestrian 42 and the background luminance can be increased, and the visibility of the pedestrian 42 can be improved. Further, since the background luminance is reduced in areas other than the side of the road, such as in front of the vehicle and to the left of the vehicle, annoyance caused by the light curtain is reduced.

Here, lamp unit 30L may be controlled so that the illuminance of a predetermined range of the light irradiation range of high beam 40L which corresponds to the pedestrian 42 is increased. Further, the size (lateral width) of the light irradiation range of high beam 40L may be variably set according to the road shape detected by the image recognition process using the image data from the camera 11 and the vehicle speed of the own vehicle 50 detected by the vehicle speed sensor 13. For example, the light irradiation range may be narrowed as the vehicle speed increases.

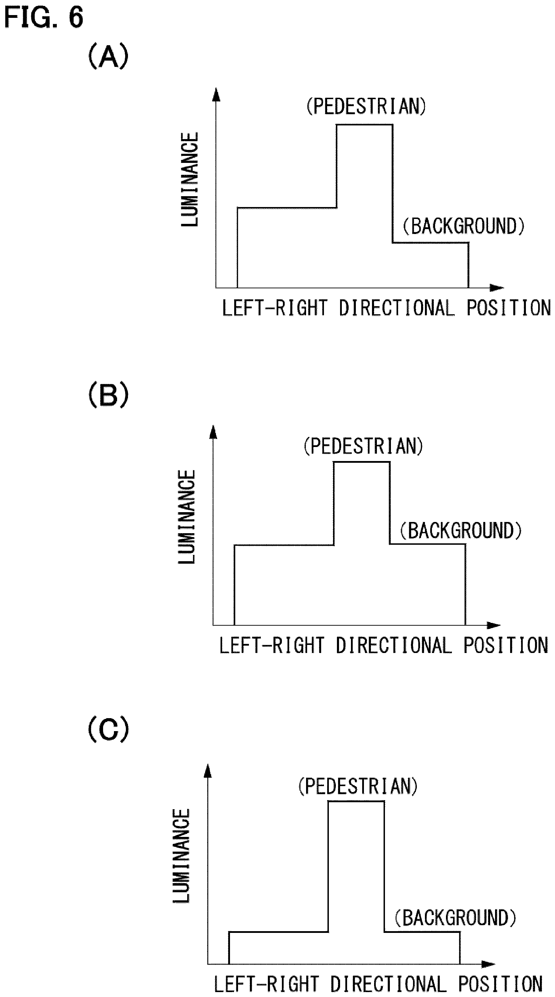

FIG. 6(A) is a diagram for explaining the contrast between the pedestrian luminance and the background luminance according to the above-described irradiation mode. Further, FIG. 6(B) is a diagram for explaining the contrast between the pedestrian luminance and the background luminance according to the irradiation mode of comparative example 1. This comparative example shows the contrast when the entire high beams 40L and 40R are set to be the light irradiation range in rainy weather. Further, FIG. 6(C) is a diagram for explaining the contrast between the pedestrian luminance and the background luminance according to the irradiation mode of comparative example 2. This comparative example shows the contrast when the entire high beams 40L and 40R are set to be the light irradiation range in fine weather. In each figure, the vertical axis indicates the luminance, and the horizontal axis indicates the left-right directional position. Comparing the irradiation mode of the present embodiment (FIG. 6(A)) with comparative example 1 (FIG. 6(B)), it can be seen that the present embodiment has a larger difference between the luminance at the pedestrian's position and the background luminance to the right of it, and the contrast is greater. The relationship between the pedestrian luminance and the background luminance to the right of the pedestrian in the irradiation mode of the present embodiment is close to the relationship in fine weather as shown in comparative example 2 (FIG. 6(C)). Therefore, the visibility of a pedestrian in rainy weather is improved.

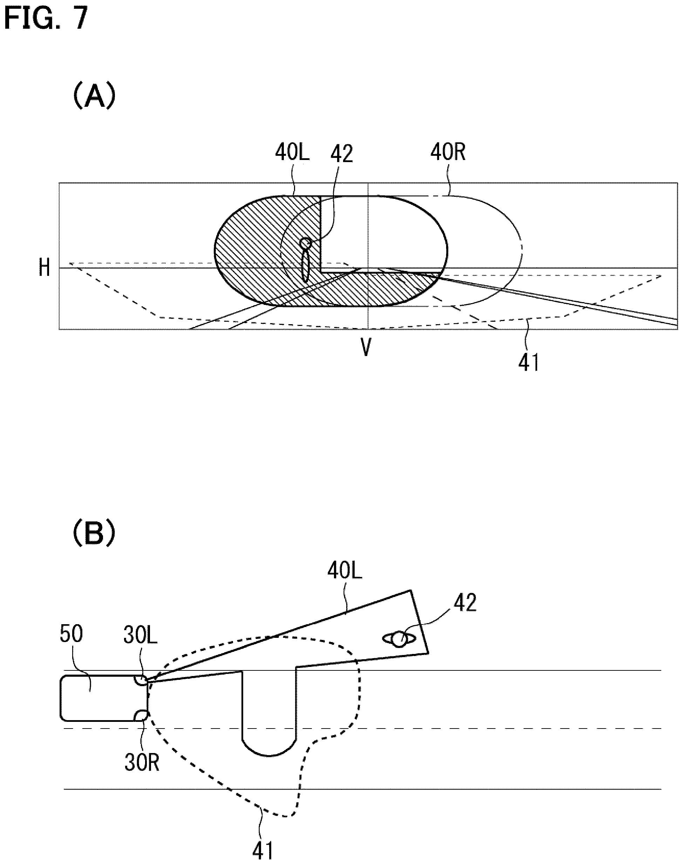

FIG. 7(A) and FIG. 7(B) are diagrams for explaining another example of high beam irradiation mode in rainy weather (irradiation mode 2). Here in these figures, the same reference numerals are used for elements common to FIG. 5(A) and FIG. 5(B), and detailed explanations are omitted as appropriate. In this irradiation mode 2, in addition to the light irradiation range of high beam 40L in the above-described irradiation mode 1, the range at and below the H line is also included in the light irradiation range. Thereby, the illuminance of the range at and below the H line, which is less likely to become a light curtain, is increased, and visibility of the lane of the own vehicle is further improved.

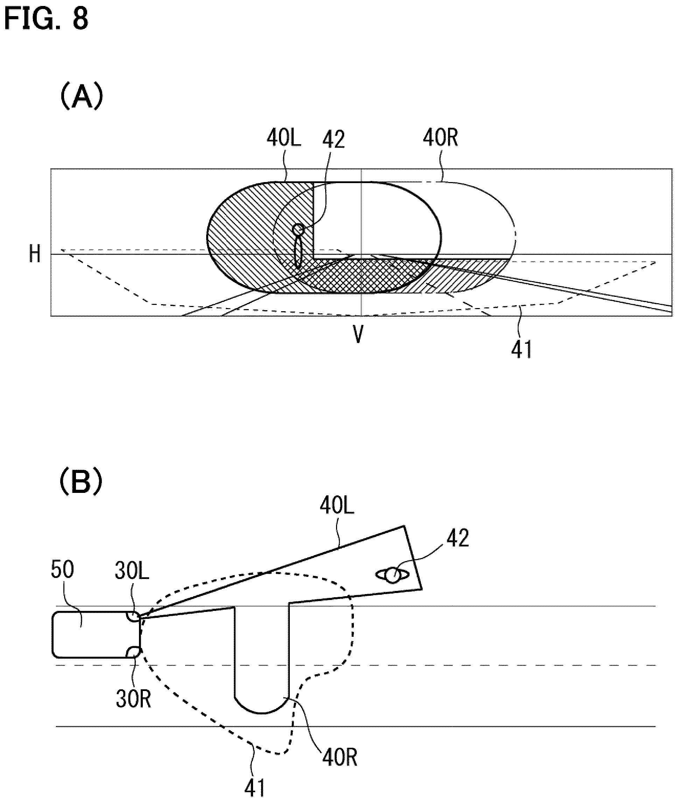

FIG. 8(A) and FIG. 8(B) are diagrams for explaining another example of high beam irradiation mode in rainy weather (irradiation mode 3). Here in these figures, the same reference numerals are used for elements common to FIG. 5(A) and FIG. 5(B), and detailed explanations are omitted as appropriate. In this irradiation mode 3, in addition to the light irradiation range of high beam 40L in the above-described irradiation mode 2, the light irradiation range of high beam 40R is also set to the range at and below the H line. Thereby, the illuminance of the range at and below the H line, which is less likely to become a light curtain, is further increased, and the visibility of the lane of the own vehicle is further improved.

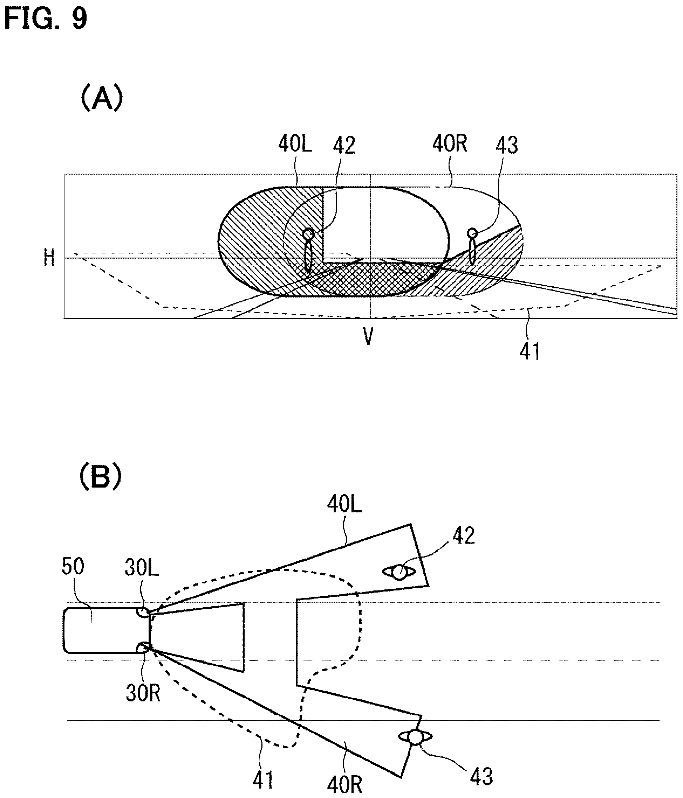

FIG. 9(A) and FIG. 9(B) are diagrams for explaining another example of high beam irradiation mode in rainy weather (irradiation mode 4). Here in these figures, the same reference numerals are used for elements common to FIG. 5(A) and FIG. 5(B), and detailed explanations are omitted as appropriate. In this irradiation mode 4, in addition to the light irradiation ranges of high beams 40L and 40R in the above-described irradiation mode 4, the light irradiation range of high beam 40R is also set to 3.6° or more to the right. In the illustrated example, the light irradiation range expands further upward from the position of 3.6° to the right as it approaches the roadside on the right, and it crosses the H line halfway. Thereby, the illuminance of the range at and below the H line, which is less likely to become a light curtain, becomes even greater, and the visibility of the lane of the own vehicle is further improved, and the visibility of a pedestrian present on the right side of the road is also improved.

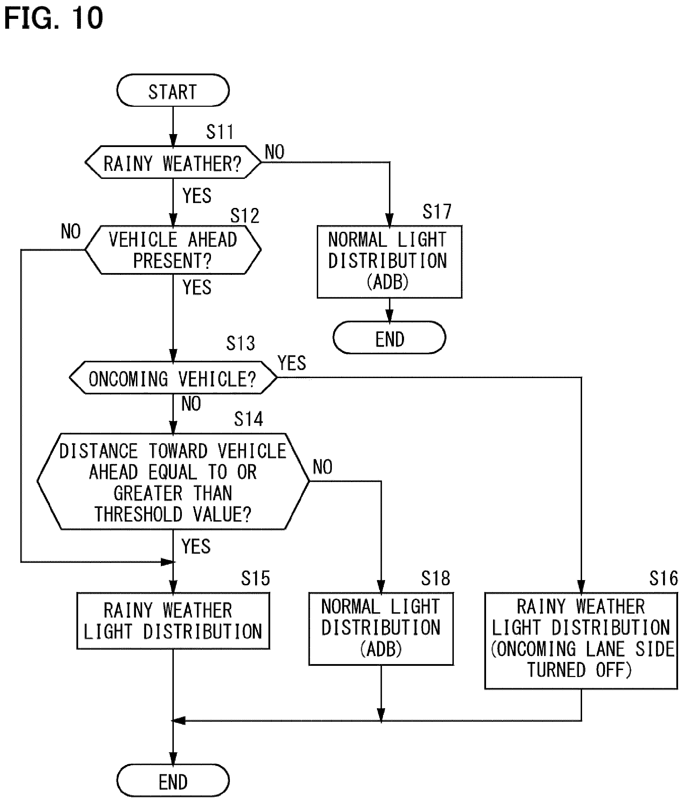

FIG. 10 is a flowchart showing operating procedure of a vehicle lamp system. The operating procedure shown here is executed repeatedly at regular intervals. Here, the order of each process may be changed as long as no inconsistency occurs in the control result, and other processes not described may be added, and these configurations are not excluded.

The weather detection unit 21 detects that it is raining (step S11; YES). Then, when the forward vehicle detection unit 20 detects a vehicle ahead (step S12; YES) and the type of the vehicle ahead is not an oncoming vehicle but a preceding vehicle (step S13; NO), and when the distance between the own vehicle and the vehicle ahead detected by the forward vehicle detection unit 20 is equal to or greater than a predetermined threshold value (step S14; YES), the light distribution control unit 22 generates a control signal to realize a light distribution pattern suitable for rainy weather and outputs the signal to each lamp unit 30L, 30R (step S15). As a result, high beams 40L, 40R according to one of the above-described irradiation modes 1 to 4 are irradiated ahead of the own vehicle. It is assumed that the irradiation mode to be used is preset (the same applies hereinafter).

Here, the threshold value for the distance between the own vehicle and the preceding vehicle or the like in step S14 can be set to 30 **m,** for example. This threshold value is obtained based on the following assumptions. For example, assume that, the lane in which the own vehicle is traveling (lane of the own vehicle) is 3.5 m wide, the preceding vehicle traveling in front of the own vehicle is 1.8 m wide and the left-right center of the preceding vehicle is almost aligned with the own vehicle. Further, assume that the pedestrian is positioned 60 m ahead of the own vehicle and is positioned 0.5 m from the left edge of the lane of the own vehicle, and the viewpoint of the driver of the own vehicle (refer to FIG. 3) is 0.5 m to the right from the left-right center of the own vehicle. In this case, when the distance between the preceding vehicle and the own vehicle becomes less than 30.5 m, the view from the driver's viewpoint to the pedestrian will be blocked by the preceding vehicle. Therefore, taking into account some margin, the threshold value can be set to 30 **m.** As a result, when the distance between the preceding vehicle and the own vehicle is smaller than the threshold value, irradiation mode for rainy weather is stopped and normal light distribution is performed.

Further, even when the forward vehicle detection unit 20 does not detect a forward vehicle (step S12; NO), the light distribution control unit 22 generates a control signal to realize a light distribution pattern suitable for rainy weather and outputs the signal to each lamp unit 30L, 30R (step S15). As a result, high beams 40L, 40R according to any of the above-described irradiation modes 1 to 4 are irradiated in front of the own vehicle.

Furthermore, when the type of forward vehicle detected by the forward vehicle detection unit 20 is an oncoming vehicle (step S13; YES), the light distribution control unit 22 generates a control signal to realize a light distribution pattern suitable for rainy weather in which at least the area above the H line on the oncoming lane side is turned off, and outputs the control signal to each lamp unit 30L, 30R (step S16). In this case, the high beams 40L, 40R according to any of the above-described irradiation modes 1 to 3 are irradiated ahead of the own vehicle.

On the other hand, when it is not raining (step S11; NO), the light distribution control unit 22 generates a control signal to realize a light distribution pattern corresponding to normal condition (fine weather) and outputs the signal to each lamp unit 30L, 30R (step S17). Further, when the vehicle ahead is a preceding vehicle and the distance between the preceding vehicle and the own vehicle is smaller than the threshold value (step S14; NO), the light distribution control unit 22 generates a control signal to realize a light distribution pattern corresponding to normal condition (fine weather) and outputs the signal to each lamp unit 30L, 30R (step S18). The normal light distribution pattern in the present embodiment is a light distribution pattern for high beams 40L, 40R, in which a predetermined range including the position of the vehicle ahead is set to the dimming range and the other range is set to the light irradiation range. Such high beams with this type of light distribution pattern is called ADB (Adaptive Driving Beam).

According to the above embodiment, it is possible to suppress the effects of light curtain phenomenon and further improve visibility ahead of the vehicle in rainy weather.

Here, note that the present disclosure is not limited to the content of the above-described embodiment, and various modifications can be made within the scope of the gist of the present disclosure. For example, the conditions such as numerical values shown in the above embodiment are merely examples and are not limited thereto. Further, in the above embodiment, a pedestrian has been exemplified as an object present at the side of the road, but the object may be a cyclist or the like.

Further, in the above embodiment, the weather detection unit 21 detects rain based on the output of the raindrop sensor 12, but rain may also be detected when the wipers are operating based on the operating state of the wiper switch, or a switch may be provided for operating in rainy weather and rain may be detected when the driver manually switches this switch. Furthermore, rain may be detected based on weather information obtained via communication. Here, in the above embodiment, rain is given as an example of inclement weather, but snowfall, fog, etc. may also be detected as inclement weather.

Further, in the above embodiment, the presence or absence, type, position, and distance between vehicles ahead is detected by image processing using image data from the camera 11, but the presence or absence of a vehicle ahead may also be detected using various sensors such as LiDAR.

Further, in the above embodiment, a vehicle lamp system mounted on a four-wheeled vehicle is exemplified, but the scope of application of this disclosure is not limited thereto, and also includes vehicles other than four-wheeled vehicles (such as two-wheeled vehicles).

Further, in the above embodiment, the description is given on the assumption that vehicles are required by law to drive on the left side of the road. However, if vehicles are required by law to drive on the right side of the road, the operation of each lamp unit 30L, 30R in the above embodiment can be reversed to switch between left and right, allowing light to be emitted in increment weather in the same manner.

The present disclosure has features as appended below.

### (Appendix 1)

A vehicle lamp system capable of emitting irradiation light of a variably set light distribution pattern to the front of a vehicle,
the system comprising a first lamp disposed on the left side of the front of the vehicle and a second lamp disposed on the right side of the front of the vehicle,
where, when the position where the vehicle is present is undergoing inclement weather, an area above a horizon line in a front view from the vehicle is irradiated with light having the light distribution pattern, in which a range forward and to the left from the forward center of the vehicle, within the range that can be emitted by the first lamp, is set as a first light irradiation range, and in which the range that can be emitted by the second lamp is set to a dimming range or a non-irradiation range.

### (Appendix 2)

The vehicle lamp system according to appendix 1,
where the first light irradiation range is set to a range biased toward a road side to the left of the vehicle.

### (Appendix 3)

The vehicle lamp system according to appendix 1 or 2,
where the light is emitted by at least one of the first lamp and the second lamp below the horizontal line.

### (Appendix 4)

The vehicle lamp system according to any one of appendices 1 to 3,
where the light having the light distribution pattern is irradiated when a preceding vehicle is present ahead of the vehicle and the distance between the preceding vehicle and the vehicle is equal to or greater than a predetermined threshold value.

### (Appendix 5)

The vehicle lamp system according to any one of appendices 1 to 4,
where, the area above the horizon line is irradiated with the light having the light distribution pattern, in which a range that is biased toward a road side of a oncoming vehicle lane of the vehicle, within the range that can be emitted by the second lamp, is set as a second light irradiation range.

### (Appendix 6)

The vehicle lamp system according to appendix 5,
where the second light irradiation range expands upward as the vehicle approaches the road side of the oncoming vehicle lane.

### (Appendix 7)

The vehicle lamp system according to appendix 6,
where the second light irradiation range is a range biased by 3.6° or more to the front right side of the vehicle.

### (Appendix 8)

The vehicle lamp system according to any one of appendices 1 to 7,
further comprising a controller that controls operation of the first lamp and the second lamp.

### (Appendix 9)

The vehicle lamp system according to any one of appendices 1 to 8,
where the inclement weather includes rain, snowfall, or fog.

### (Appendix 10)

A vehicle lamp system capable of emitting irradiation light of a variably set light distribution pattern to the front of a vehicle,
the system comprising a first lamp disposed on the right side of the front of the vehicle and a second lamp disposed on the left side of the front of the vehicle,
where, when the position where the vehicle is present is undergoing inclement weather, an area above a horizon line in a front view from the vehicle is irradiated with light having the light distribution pattern, in which a range forward and to the right from the forward center of the vehicle, within the range that can be emitted by the first lamp, is set as a first light irradiation range, and in which the range that can be emitted by the second lamp is set to a dimming range or a non-irradiation range.

### (Appendix 11)

The vehicle lamp system according to appendix 10,
where the first light irradiation range is set to a range biased toward a road side to the right of the vehicle.

### (Appendix 12)

The vehicle lamp system according to appendix 10 or 11,
where the light is emitted by at least one of the first lamp and the second lamp below the horizontal line.

### (Appendix 13)

The vehicle lamp system according to any one of appendices 10 to 12,
where the light having the light distribution pattern is irradiated when a preceding vehicle is present ahead of the vehicle and the distance between the preceding vehicle and the vehicle is equal to or greater than a predetermined threshold value.

### (Appendix 14)

The vehicle lamp system according to any one of appendices 10 to 13,
where, the area above the horizon line is irradiated with the light having the light distribution pattern, in which a range that is biased toward a road side of a oncoming vehicle lane of the vehicle, within the range that can be emitted by the second lamp, is set as a second light irradiation range.

### (Appendix 15)

The vehicle lamp system according to appendix 14,
where the second light irradiation range expands upward as the vehicle approaches the road side of the oncoming vehicle lane.

### (Appendix 16)

The vehicle lamp system according to appendix 15,
where the second light irradiation range is a range biased by 3.6° or more to the front left side of the vehicle.

### (Appendix 17)

The vehicle lamp system according to any one of appendices 10 to 16,
further comprising a controller that controls operation of the first lamp and the second lamp.

### (Appendix 18)

The vehicle lamp system according to any one of appendices 10 to 17,
where the inclement weather includes rain, snowfall, or fog.

### Reference Signs List

- 1:: Vehicle lamp system

- 10:: Controller
- 11:: Camera
- 12:: Raindrop sensor
- 13:: Vehicle speed sensor
- 20:: Forward vehicle detection unit
- 21:: Weather detection unit
- 22:: Light distribution control unit
- 30L, 30R:: Lamp unit
- 31:: Driver
- 32:: LED array
- 40L, 40R:: High beam
- 41:: Low beam
- 42:: Pedestrian
- 50:: Own vehicle

## Claims

1. A vehicle lamp system capable of emitting irradiation light of a variably set light distribution pattern to the front of a vehicle,
the system comprising a first lamp disposed on the left side of the front of the vehicle and a second lamp disposed on the right side of the front of the vehicle,
wherein, when the position where the vehicle is present is undergoing inclement weather, an area above a horizon line in a front view from the vehicle is irradiated with light having the light distribution pattern, in which a range forward and to the left from the forward center of the vehicle, within the range that can be emitted by the first lamp, is set as a first light irradiation range, and in which the range that can be emitted by the second lamp is set to a dimming range or a non-irradiation range.

2. The vehicle lamp system according to claim 1,
wherein the first light irradiation range is set to a range biased toward a road side to the left of the vehicle.

3. The vehicle lamp system according to claim 1,
wherein the light is emitted by at least one of the first lamp and the second lamp below the horizontal line.

4. The vehicle lamp system according to claim 1,
wherein the light having the light distribution pattern is irradiated when a preceding vehicle is present ahead of the vehicle and the distance between the preceding vehicle and the vehicle is equal to or greater than a predetermined threshold value.

5. The vehicle lamp system according to claim 1,
wherein, the area above the horizon line is irradiated with the light having the light distribution pattern, in which a range that is biased toward a road side of a oncoming vehicle lane of the vehicle, within the range that can be emitted by the second lamp, is set as a second light irradiation range.

6. The vehicle lamp system according to claim 5,
wherein the second light irradiation range expands upward as the vehicle approaches the road side of the oncoming vehicle lane.

7. The vehicle lamp system according to claim 6,
wherein the second light irradiation range is a range biased by 3.6° or more to the front right side of the vehicle.

8. The vehicle lamp system according to claim 1,
further comprising a controller that controls operation of the first lamp and the second lamp.

9. The vehicle lamp system according to claim 1,
wherein the inclement weather includes rain, snowfall, or fog.
